# EUROPEAN PATENT APPLICATION

(11) **EP 4 224 086 A1**
(43) Date of publication of application: **09.08.2023**
(21) Application number: 21876004.9
(22) Date of filing: 28.09.2021
(51) Int. Cl.: F24H 1/18, F24H 9/18, F28F 3/02

(54) **ELECTRODE BOILER SYSTEM**

(30) Priority: 29.09.2020 KR 20200126792
(71) Applicant: Kim, No Eul, Yangsan-si, Gyeongsangnam-do 50607 (KR)
(72) Inventor: KIM, Young Tae, Busan 48472 (KR); KIM, No Eul, Yangsan-si Gyeongsangnam-do 50607 (KR)
(74) Representative: AWA Sweden AB
(86) International application number: PCT/KR2021/013268
(87) International publication number: WO 2022/071729

(57) **Abstract**

An embodiment of the present disclosure discloses an electrode boiler device configured to heat a fluid, the electrode boiler device including a heating part formed such that electrolyzed water is disposed therein, a body part formed such that the fluid is disposed therein to overlap the electrolyzed water in at least one region, an electrode part including a plurality of electrodes that are disposed in the heating part to overlap the fluid in the body part and formed to heat the electrolyzed water, and a heat dissipation part disposed between the heating part and the body part.

## Description

### TECHNICAL FIELD

The present disclosure relates to an electrode boiler device.

### BACKGROUND ART

As technology advances, products to which various technologies are applied in the field of machinery, electronics, and the like are being developed and produced, and accordingly, various heating systems, for example, boiler systems, are being developed.

Boilers may be largely classified into industrial boilers, agricultural boilers, and household boilers. In addition, the types of boilers may be classified as a direct heating method or an indirect heating method in which a medium such as water is heated and circulated.

In addition, according to the types of energy sources of the boilers, as specific examples, boilers using petroleum, boilers using briquettes or the like, boilers using wood, boilers using gas, boilers using electricity, and the like are being used or studied.

Among them, boilers using electricity to provide the heat source may have advantages in terms of emissions and environmental problems compared to boilers using fossil fuels such as petroleum or coal.

However, there is a limitation in implementing a boiler system while easily securing thermal efficiency and electrical stability of a boiler using electricity.

### DESCRIPTION OF EMBODIMENTS

### TECHNICAL PROBLEM

The present disclosure may provide an electrode boiler device that may increase the use convenience of a user by improving electrical stability and thermal efficiency.

### TECHNICAL SOLUTION TO PROBLEM

An embodiment of the present disclosure discloses an electrode boiler device configured to heat a fluid, the electrode boiler device including a heating part formed such that electrolyzed water is disposed therein, a body part formed such that the fluid is disposed therein to overlap the electrolyzed water in at least one region, an electrode part including a plurality of electrodes that are disposed in the heating part to overlap the fluid in the body part and formed to heat the electrolyzed water, and a heat dissipation part disposed between the heating part and the body part.

In the present embodiment, the heat dissipation part may further include an insulating layer formed on one side facing the electrolyzed water.

In the present embodiment, at least one region of each of the heating part, the body part, and the heat dissipation part may include a region extending from a side surface, overlapping each other, and coupled to each other.

In the present embodiment, the heat dissipation part may include a base and a plurality of heat dissipation protrusions formed to protrude from the base to face the fluid.

Other aspects, features, and advantages other than those described above will become apparent from the following drawings, claims, and detailed description of the disclosure.

### ADVANTAGEOUS EFFECTS OF DISCLOSURE

An electrode boiler device according to the present disclosure can increase the use convenience of a user by improving electrical stability and thermal efficiency.

### BRIEF DESCRIPTION OF DRAWINGS

FIG. 1 is a schematic view illustrating an electrode boiler device according to an embodiment of the present disclosure.
FIG. 2 is an exemplary enlarged view of portion A of FIG. 1.
FIG. 3 is an exemplary enlarged view of portion B of FIG. 1.
FIG. 4 is a schematic view illustrating an electrode boiler device according to another embodiment of the present disclosure.
FIG. 5 is a schematic view illustrating an electrode boiler device according to another embodiment of the present disclosure.
FIG. 6 is a view illustrating a modified example of FIG. 5.
FIGS. 7 and 8 are exemplary views as viewed from M direction in FIG. 5.
FIG. 9 is a schematic view illustrating an electrode boiler device according to another embodiment of the present disclosure.
FIG. 10 is a schematic view illustrating an electrode boiler device according to another embodiment of the present disclosure.
FIG. 11 is an exemplary view as viewed from K direction of FIG. 10.
FIG. 12 is an exemplary view as viewed from M direction of FIG. 10.
FIG. 13 is a schematic view illustrating an electrode boiler device according to another embodiment of the present disclosure.
FIG. 14 is a schematic view illustrating an electrode boiler device according to another embodiment of the present disclosure.

### MODE OF DISCLOSURE

Hereinafter, configurations, and operations of the present disclosure will be described in detail with reference to embodiments of the present disclosure illustrated in the accompanying drawings.

While the present disclosure is susceptible to various modifications and embodiments, specific embodiments thereof are shown by way of example in the drawings and will herein be described in detail. Advantages and features of the present disclosure and a method of achieving the same should become clear with embodiments described below in detail with reference to the drawings. However, the present disclosure is not limited to the embodiments disclosed below, but may be implemented in various forms.

Hereinafter, the embodiments of the present disclosure will be described below in detail with reference to the accompanying drawings, and when the embodiments of the present disclosure are described with reference to the drawings, the same or corresponding components are given the same reference numerals, and repetitive descriptions thereof will be omitted.

In the following embodiments, the terms "first," "second," and the like have been used to distinguish one component from another, rather than limitative in all aspects.

In the following embodiments, singular expressions are intended to include plural expressions as well, unless the context clearly indicates otherwise.

In the following embodiments, the terms such as "including," "having," and "comprising" are intended to indicate the existence of features or components disclosed in the specification, and are not intended to preclude the possibility that one or more other features or components may be added.

For convenience of description, sizes of components shown in the drawings may be exaggerated or reduced. For example, since the size and thickness of each component illustrated in the drawing are arbitrarily shown for convenience of description, the present disclosure is not necessarily limited to those illustrated in the drawing.

In the following embodiments, the x-axis, y-axis, and z-axis are not limited to three axes on a Cartesian coordinate system, and may be interpreted in a broad sense including them. For example, the x-axis, the y-axis, and the z-axis may be orthogonal to each other, but may refer to different directions that are not orthogonal to each other.

In a case in which a particular embodiment is realized otherwise, a particular process may be performed out of the order described. For example, two processes described in succession may be performed substantially simultaneously, or may be performed in an order opposite to the described order.

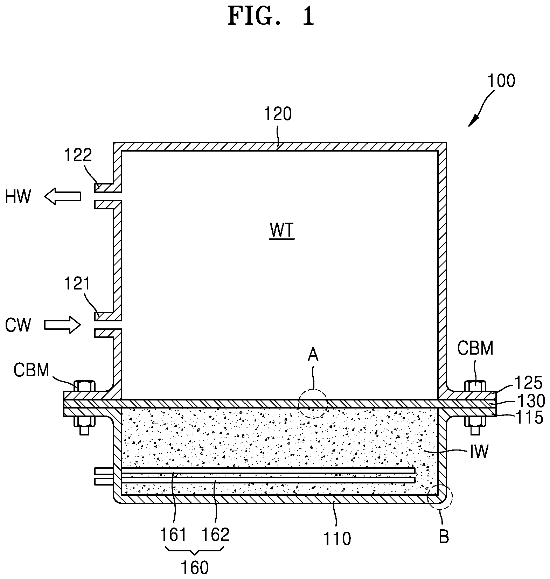

FIG. 1 is a schematic view illustrating an electrode boiler device according to an embodiment of the present disclosure.

Referring to FIG. 1, an electrode boiler device 100 of the present embodiment may include a heating part 110, a body part 120, a heat dissipation part 130, and an electrode part 160.

The heating part 110 may be formed such that electrolyzed water IW is disposed therein.

For example, the heating part 110 may have a shape of a wide pillar, and as a specific example, the heating part 110 may have a shape similar to a cylinder.

In an optional embodiment, the heating part 110 may have an exposed shape whose upper portion is not covered. Accordingly, it is possible to easily transfer heat to the heat dissipation part 130 through the electrolyzed water IW.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

As an electrolyte material included in the electrolyzed water IW, there are various types including rust inhibitors or the like that contain edible soda, chlorite, silicate, an inorganic material of polyphosphate, amines, oxyacids, or the like as main components.

The heating part 110 may have various shapes and may be formed to control at least the entry and exit of the electrolyzed water IW. For example, the heating part 110 may be formed such that the electrolyzed water IW does not flow out of the heating part 110 after filling the heating part 110 with the electrolyzed water IW, and in another example, the heating part 110 may include a replenishing inlet (not shown) for replenishing or discharging the electrolyzed water IW.

The heating part 110 may be formed of various materials. For example, the heating part 110 may be formed of a durable and lightweight insulating material. In an optional embodiment, the heating part 110 may be formed of a plastic material including various types of resins. In another optional embodiment, the heating part 110 may include an inorganic material such as ceramic.

In addition, in another optional embodiment, the heating part 110 may be formed of a metal material.

In another example, the heating part 110 may include a Teflon resin that is a fluorinated resin.

In an optional embodiment, from among surfaces of the heating part 110, at least an inner surface of the heating part 110 adjacent to the electrolyzed water IW may include an insulating layer, may include, for example, an inorganic layer, and may contain an inorganic material including ceramic.

In an optional embodiment, the heating part 110 may have a shape similar to an outer shape of the body part 120 to be described below, and for example, may have an edge with a shape similar to a circle.

As an example of a specific shape, the heating part 110 may include a bottom portion and a side portion connected to the bottom portion.

In an optional embodiment, a first connection part 115 may be formed on one side of the heating part 110. For example, the first connection part 115 may have a shape extending outwardly from an upper end of a side surface of the heating part 110.

As a specific example, the first connection part 115 may be formed to be connected to the side surface of the heating part 110, and may have a shape extending in a direction away from the side surface so as to have a shape surrounding the side surface.

The first connection part 115 is for coupling with the body part 120 or the heat dissipation part 130 to be described below and may have a width, and may have the width in a direction away from the side surface of the heating part 110. More details regarding the coupling will be described below.

The body part 120 may be formed such that a fluid WT may be disposed therein to overlap the electrolyzed water IW in at least one region. The fluid WT may be of various types, and may include, for example, a liquid or a gas.

In an optional embodiment, the fluid WT may include water, and for example, the electrode boiler device 100 may employ a method of using hot water.

The body part 120 may have a pillar shape having a height, and as a specific example, the body part 120 may have a shape similar to a cylinder. In an optional embodiment, the height of the body part 120 may have a value greater than that of a height of the heating part 110, which may allow the body part 120 to efficiently accommodate the fluid WT and facilitate the circulation of hot water in the body part 120.

In an optional embodiment, the body part 120 may have a shape in which a lower portion, for example, a surface facing the heating part 110 is uncovered and exposed. Accordingly, the heat transferred to the heat dissipation part 130 through the electrolyzed water IW may be easily transferred to the fluid WT.

The body part 120 may have various shapes, and may include at least an inlet 121 for inflowing the fluid WT and an outlet 122 for discharging the fluid WT.

Specifically, an unheated fluid CW before heating, which is introduced via the inlet 121, may be introduced, and for example, the unheated fluid CW may include room temperature or low temperature water.

A heated fluid HW, for example, heated water may be discharged via the outlet 122.

As a specific example, the unheated fluid CW including room temperature water, which is introduced via the inlet 121, is introduced into the body part 120 and then heated through the heating part 110, and the heated fluid HW including heated water may be discharged via the outlet 122.

The body part 120 may be formed of various materials. For example, the body part 120 may be formed of a durable and lightweight insulating material. In an optional embodiment, the body part 120 may be formed of a plastic material including various types of resins. In another optional embodiment, the body part 120 may include an inorganic material such as ceramic.

In addition, in another optional embodiment, the body part 120 may be formed of a metal material.

In another example, the body part 120 may include a Teflon resin that is a fluorine resin.

In an optional embodiment, from among surfaces of the body part 120, at least an inner surface of the body part 120 adjacent to the fluid WT may include an insulating layer, may include, for example, an inorganic layer, and may contain an inorganic material including ceramic.

In an optional embodiment, a second connection part 125 may be formed on one side of the body part 120. In addition, the second connection part 125 may be formed to overlap the first connection part 115.

In addition, for example, the second connection part 125 may have a shape extending outwardly from a lower end of a side surface of the body part 120.

As a specific example, the second connection part 125 may be formed to be connected to the side surface of the body part 120, and may have a shape extending in a direction away from the side surface so as to have a shape surrounding the side surface.

The second connection part 125 is for coupling with the heating part 110 or the heat dissipation part 130 and may have a width, and may have the width in a direction away from the side surface of the body part 120. More details regarding the coupling will be described below.

The electrode part 160 may be disposed inside the heating part 110. In addition, the electrode part 160 may be disposed to overlap the fluid WT of the body part 120 in the heating part 110.

The electrode part 160 may be formed to heat the electrolyzed water IW in the heating part 110.

The electrode part 160 may include a plurality of electrodes.

For example, the electrode part 160 may include a first electrode 161 and a second electrode 162.

As a specific example, the first electrode 161 and the second electrode 162 may each be formed to be in contact with the electrolyzed water IW. Although not shown in the drawings, current may be applied to the first electrode 161 and the second electrode 162 under the control of an electrode control part (not shown), and the applied current may be controlled through the electrode control part (not shown).

The electrolyzed water IW may be heated by the current applied to the first electrode 161 and the second electrode 162 of the electrode part 160. Heat of the electrolyzed water IW may be transferred to the fluid WT of the body part 120, and the fluid WT may be heated.

The first electrode 161 and the second electrode 162 may have shapes spaced apart from each other at an interval in an inner space of the heating part 110.

For example, the first electrode 161 and the second electrode 162 may have shapes elongated while being spaced apart from each other with an interval in the inner space of the heating part 110, and may each have a linear shape. One end portion formed to extend from each of the first electrode 161 and the second electrode 162 may be formed to be spaced apart from a region of the heating part 110, specifically, an inner surface of the heating part 110.

Further, a conductive part (not shown) connected to one region of each of the first electrode 161 and the second electrode 162 may be included so that current is applied to the first electrode 161 and the second electrode 162 therethrough. The conductive part (not shown) may be a wire-shaped conductive line and may be connected to the electrode control part (not shown). In an optional embodiment, the conductive part (not shown) may be separately provided on an outside of the heating part 110, and may also be integrally formed with one surface of the heating part 110 in another example.

Although not shown in the drawings, in an optional embodiment, the electrode part 160 may also include three electrodes in a three-phase form.

In an optional embodiment, a temperature sensing member (not shown) may be connected to the heating part 110 to measure the temperature of the electrolyzed water IW inside the heating part 110. In addition, a cooling part (not shown) may also be disposed to control overheating of the temperature sensing member (not shown).

A control part (not shown) may be formed to control the current applied to the electrode part 160. The current applied to each of the first electrode 161 and the second electrode 162 of the electrode part 160 may be controlled through the control part (not shown), and in an optional embodiment, the current may be controlled in real time.

At this time, the control part (not shown) may check the amount of current applied to the electrode part 160 and perform a current control by increasing or decreasing the amount of current according to a set value, so that a rapid change in the temperature of the electrolyzed water IW may be reduced.

The control part (not shown) may have various shapes to facilitate a change in current. For example, the control part (not shown) may include various types of switches, and may include a non-contact relay such as a solid state relay (SSR) for sensitive and rapid control.

The heat dissipation part 130 may be disposed between the heating part 110 and the body part 120.

The heat dissipation part 130 may be located between the electrolyzed water IW disposed in the heating part 110 and the fluid WT disposed in the body part 120. In addition, the heat dissipation part 130 may be formed to be spaced apart from the electrode part 160.

In an optional embodiment, the heat dissipation part 130 may be in contact with the electrolyzed water IW and may have, for example, a shape covering an upper portion of an open upper side of the heating part 110.

In an optional embodiment, the heat dissipation part 130 may be in contact with the fluid WT and may also have, for example, a shape covering open one side of the body part 120, specifically, one side of the body part 120 facing the heating part 110.

The heat dissipation part 130 may be formed of a material having high thermal conductivity, and may be formed to include, for example, a metal material. Heat of the electrolyzed water IW may be easily transferred to the fluid WT through the heat dissipation part 130.

As a specific example, the heat dissipation part 130 may include iron, aluminum, stainless steel, or other alloys.

In addition, in an optional embodiment, the heat dissipation part 130 may include an insulating coating layer (not shown) on one side facing the electrolyzed water IW, and may also include an insulating coating layer (not shown) on one side facing the fluid WT. This may reduce or prevent current from flowing through the heat dissipation part 130 from the electrolyzed water IW.

In an optional embodiment, the heat dissipation part 130 may have a region elongated from a side surface thereof. For example, at least one region of an edge of the heat dissipation part 130 may be formed to extend so as not to overlap the electrolyzed water IW and the fluid WT.

In addition, the extended region of the heat dissipation part 130 may be formed to overlap the first connection part 115 and the second connection part 125, and may be disposed between the first connection part 115 and the second connection part 125.

As a specific example, the heat dissipation part may be formed to surround a region in which the electrolyzed water IW or the fluid WT is disposed.

The first connection part 115 and the second connection part 125 may have regions overlapping and coupled to one region of the heat dissipation part 130 disposed therebetween. For example, the first connection part 115, the second connection part 125, and the one region of the heat dissipation part 130 are coupled to each other to couple the heating part 110, the body part 120, and the heat dissipation part 130.

In an optional embodiment, a coupling member CBM may be disposed to overlap the first connection part 115 and the second connection part 125. In addition, the coupling member CBM may be disposed to overlap one region of the heat dissipation part 130. The first connection part 115, the second connection part 125, and the heat dissipation part 130 may be coupled through the coupling member CBM.

For example, the coupling member CBM may have the form of a bolt or a nut. In addition, in another example, the coupling member CBM may include screws, pins, rivets, or other various forms or kinds of members for coupling.

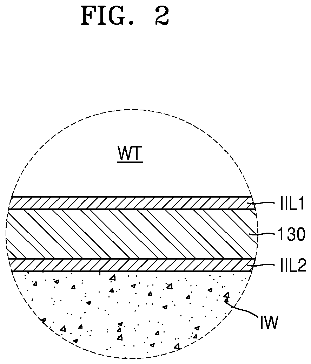

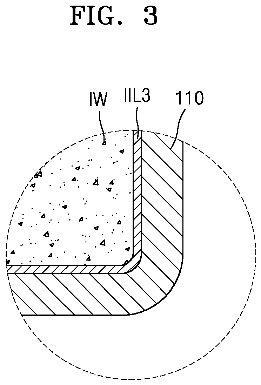

FIG. 2 is an exemplary enlarged view of portion A of FIG. 1, and FIG. 3 is an exemplary enlarged view of portion B of FIG. 1.

In an optional embodiment, referring to FIG. 2, the heat dissipation part 130 may include a first insulating layer IIL1 on a side surface facing the fluid WT and a second insulating layer IIL2 on a side surface facing the electrolyzed water IW.

In addition, in an optional embodiment, the heat dissipation part 130 may include only the second insulating layer IIL2 on at least the side surface facing the electrolyzed water IW.

The first insulating layer IIL1 or the second insulating layer IIL2 may include an inorganic layer, such as a ceramic material or the like.

In another example, the first insulating layer IIL1 or the second insulating layer IIL2 may include an organic layer such as a resin layer, and may also include an insulating Teflon layer as a specific example.

The second insulating layer IIL2 may reduce the current flowing to the heat dissipation part 130 through the electrolyzed water IW, and may reduce or prevent the flow of the leaked current from remaining in the body part 120 or the fluid WT. Furthermore, when leakage current components remain in the heat dissipation part 130, the first insulating layer IIL1 may reduce or prevent the leakage current components from flowing to the fluid WT, thereby reducing the occurrence of an electrical accident that may occur during the flow of the fluid WT.

In an optional embodiment, referring to FIG. 3, the heating part 110 may include a third insulating layer IIL3 on at least an inner surface facing the electrolyzed water IW.

The third insulating layer IIL3 may include an inorganic layer such as a ceramic material.

In another example, the third insulating layer IIL3 may include an organic layer such as a resin layer, and may also include an insulating Teflon layer as a specific example.

The third insulating layer IIL3 may reduce the current flowing to the inner surface or an outer side of the heating part 110 through the electrolyzed water IW, and may reduce or prevent the flow of current through the heating part 110 from being transmitted to the body part 120 or the fluid WT.

The electrode boiler device of the present embodiment may heat electrolyzed water inside the heating part through control of current applied to the electrodes of the electrode part of the heating part. Such heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Through such a configuration, the heat of the electrolyzed water may be effectively transferred to the fluid, which may improve the heating efficiency of the fluid through the electrolyzed water.

In addition, the electrodes of the electrode part are arranged in a shape facing the side surface of the heating part so as to overlap the electrolyzed water, for example, extending in a direction crossing a direction in which the heating part and the body part are arranged, so that an electrolyzed water heating rate in the heating part may be improved.

In addition, the fluid is disposed to overlap the heated electrolyzed water, so that the heating of the fluid may proceed rapidly, and a circulating flow from an unheated fluid introduced into the body part to a heated fluid may proceed smoothly, so that the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, from among the side surfaces of the heat dissipation part, the side surface facing the fluid includes an insulating layer, for example, an inorganic insulating layer such as ceramic, so that leakage current components that may remain in the heat dissipation part may be effectively reduced or prevented from being transmitted to the fluid, thereby increasing the safety of the user even when the fluid is heated and discharged to the outside of the electrode boiler device.

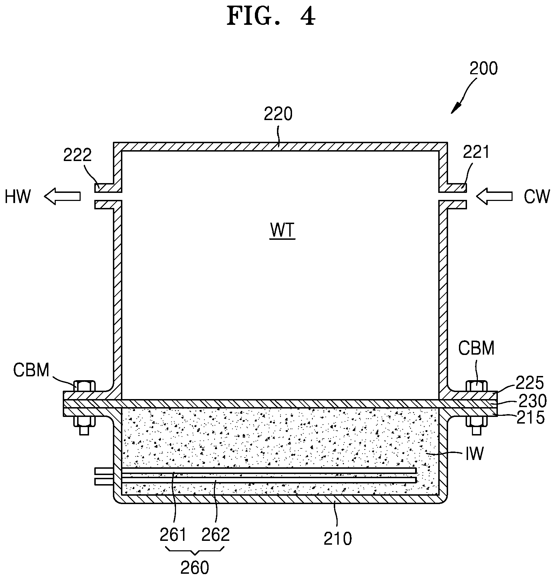

FIG. 4 is a schematic view illustrating an electrode boiler device according to another embodiment of the present disclosure.

Referring to FIG. 4, an electrode boiler device 200 of the present embodiment may include a heating part 210, a body part 220, a heat dissipation part 230, and an electrode part 260.

The heating part 210 may be formed such that an electrolyzed water IW is disposed therein, and is the same or similar to that described in the embodiment described above, and thus a description thereof will be omitted.

The body part 220 may be formed such that a fluid WT may be disposed therein to overlap the electrolyzed water IW in at least one region. The fluid WT may be of various types, and may include, for example, a liquid or a gas.

The body part 220 may have various shapes, and may include at least an inlet 221 for inflowing the fluid WT and an outlet 222 for discharging the fluid WT.

As a specific example, the inlet 221 is formed to face one side of the body part 220, and the outlet 222 may be formed in a region different from that in which the inlet 221 is formed so as to face the other side of the body part 220.

In an optional embodiment, the region in which the inlet 221 is formed and the region in which the outlet 222 is formed may be formed in opposite directions.

Through this, an unheated fluid CW introduced via the inlet 221 may be sufficiently heated inside the body part 220, and then a heated fluid HW may be discharged via the outlet 222.

The electrode part 260 may be disposed in the heating part 210, and is the same or similar to that described in the embodiment described above, and thus a detailed description thereof will be omitted.

The heat dissipation part 230 may be disposed between the heating part 210 and the body part 220, and is the same or similar to that described in the embodiment described above, and thus a detailed description thereof will be omitted.

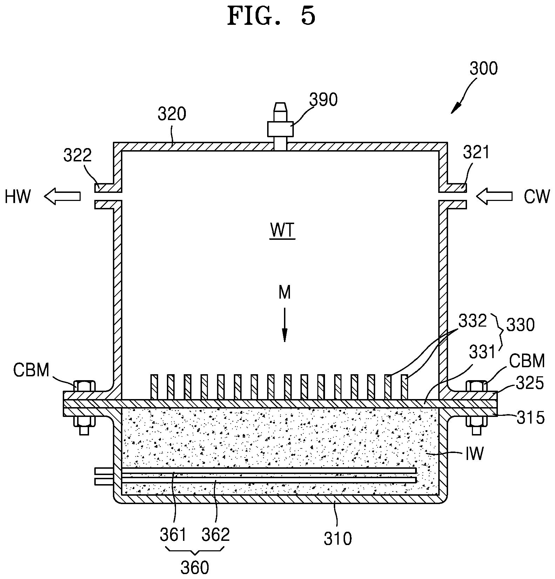

FIG. 5 is a schematic view illustrating an electrode boiler device according to another embodiment of the present disclosure.

Referring to FIG. 5, an electrode boiler device 300 of the present embodiment may include a heating part 310, a body part 320, a heat dissipation part 330, and an electrode part 360.

The heating part 310 may be formed such that electrolyzed water IW is disposed therein. In addition, in an optional embodiment, a first connection part 315 may be formed on one side of the heating part 310. For example, the first connection part 315 may have a shape extending outwardly from an upper end of a side surface of the heating part 310.

The configuration and the like of the heating part 310 are the same as or similar to those described in the embodiment described above, and thus a detailed description thereof will be omitted.

The body part 320 may be formed such that a fluid WT may be disposed therein to overlap the electrolyzed water IW in at least one region. The fluid WT may be of various types, and may include, for example, a liquid or a gas.

In an optional embodiment, the fluid WT may include water, and for example, the electrode boiler device 300 may employ a method of using hot water.

The body part 320 may have various shapes, and may include at least an inlet 321 for inflowing the fluid WT and an outlet 322 for discharging the fluid WT.

In an optional embodiment, a second connection part 325 may be formed on one side of the body part 320, and the second connection part 325 may be formed to overlap the first connection part 315.

The configuration and the like of the body part 320 are the same as or similar to those described in the embodiment described above, and thus a detailed description thereof will be omitted.

The electrode part 360 may be disposed in the heating part 310, and is the same or similar to that described in the embodiment described above, and thus a detailed description thereof will be omitted.

The heat dissipation part 330 may be disposed between the heating part 310 and the body part 320.

The heat dissipation part 330 may be located between the electrolyzed water IW disposed in the heating part 310 and the fluid WT disposed in the body part 320. In addition, the heat dissipation part 330 may be formed to be spaced apart from the electrode part 360.

In an optional embodiment, the heat dissipation part 330 may be in contact with the electrolyzed water IW and may have, for example, a shape covering an upper portion of an open upper side of the heating part 310.

In an optional embodiment, the heat dissipation part 330 may be in contact with the fluid WT and may also have, for example, a shape covering open one side of the body part 320, specifically, one side of the body part 320 facing the heating part 310.

The heat dissipation part 330 may have various shapes, and may include, for example, a base 331 and a heat dissipation protrusion 332.

The base 331 may have an elongated shape and may have a shape similar to, for example, a plate.

A plurality of heat dissipation protrusions 332 may be provided, may be connected to the base 331, and may protrude from the base 331 toward the fluid WT.

Heat transfer efficiency from the heat dissipation part 330 to the fluid WT may be improved through the plurality of heat dissipation protrusions 332.

In an optional embodiment, the plurality of heat dissipation protrusions 332 may have a shape extending in one direction and may have regions spaced apart from each other.

The heat dissipation part 330 may be formed of a material having high thermal conductivity, and may be formed to include, for example, a metal material. Heat of the electrolyzed water IW may be easily transferred to the fluid WT through the heat dissipation part 330.

As a specific example, the heat dissipation part 330 may include iron, aluminum, stainless steel, or other alloys.

In addition, in an optional embodiment, the heat dissipation part 330 may include an insulating coating layer (not shown) on one side facing the electrolyzed water IW, and may also include an insulating coating layer (not shown) on one side facing the fluid WT. This may reduce or prevent current from flowing through the heat dissipation part 330 from the electrolyzed water IW.

In an optional embodiment, the heat dissipation part 330 may have a region elongated from a side surface thereof. For example, at least one region of an edge of the heat dissipation part 330, specifically, at least one region of the base 331 of the heat dissipation part 330 may be formed to extend so as not to overlap the electrolyzed water IW and the fluid WT.

In addition, at least one extended region of the base 331 of the heat dissipation part 330 may be formed to overlap the first connection part 315 and the second connection part 325, and may be disposed between the first connection part 315 and the second connection part 325.

As a specific example, at least one extended region of the base 331 may be formed to surround a region in which the electrolyzed water IW or the fluid WT is disposed.

The first connection part 315 and the second connection part 325 may have regions overlapping and coupled to one region of the base 331 disposed therebetween. For example, the first connection part 315, the second connection part 325, and the one region of the base 331 are coupled to each other to couple the heating part 310, the body part 320, and the heat dissipation part 330.

In an optional embodiment, a coupling member CBM may be disposed to overlap the first connection part 315 and the second connection part 325. In addition, the coupling member CBM may be disposed to overlap one region of the heat dissipation part 330. The first connection part 315, the second connection part 325, and the heat dissipation part 330 may be coupled through the coupling member CBM.

For example, the coupling member CBM may have the form of a bolt or a nut. In addition, in another example, the coupling member CBM may include screws, pins, rivets, or other various forms or kinds of members for coupling.

In an optional embodiment, a pressure control part 390 may be formed on one side of the body part 320. For example, the pressure control part 390 may be formed on an upper portion of the body part 320, for example, on a surface opposite a region facing the heating part 310.

The pressure control part 390 may control an excessive increase in pressure in the body part 320, and for example, the pressure control part 390 may be provided in the form of a valve. In addition, in another example, the pressure control part 390 may be provided in the form of a safety valve that is open when a certain pressure is reached to relieve an internal pressure of the body part 320.

The fluid WT inside the body part 320 may be heated to increase an inner space pressure of the body part 320, and thus, the pressure control part 390 may be disposed to adjust the pressure applied to the body part 320 and prevent a safety accident.

In an optional embodiment, the configuration of FIG. 2 described above may be applied, and for example, the heat dissipation part 330 may include a first insulating layer (not shown) on a side surface facing the fluid WT and a second insulating layer (not shown) on a side surface facing the electrolyzed water IW. In addition, at this time, the second insulating layer (not shown) may be formed on surfaces of the base 331 and the heat dissipation protrusion 332 of the heat dissipation part 330.

In an optional embodiment, the configuration of FIG. 3 described above may be applied, and for example, the heating part 310 may include a third insulating layer (not shown) on an inner surface facing at least the electrolyzed water IW.

Contents of the materials and the like of the first to third insulating layers are the same as those described in the embodiment described above, and thus a detailed description thereof will be omitted.

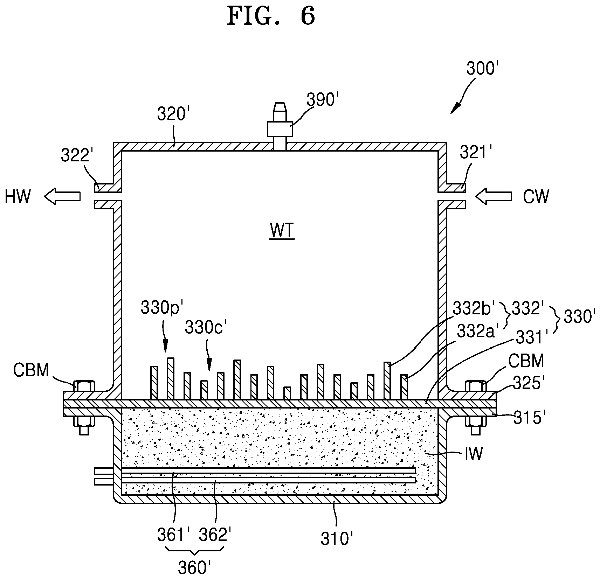

FIG. 6 is a view illustrating a modified example of FIG. 5.

Referring to FIG. 6, an electrode boiler device 300' of the present embodiment may include a heating part 310', a body part 320', a heat dissipation part 330', and an electrode part 360'.

In addition, in an optional embodiment, a pressure control part 390' may be included.

For convenience of description, differences from the above-described embodiment will be mainly described.

The heat dissipation part 330' may include a base 331' and a heat dissipation protrusion 332'.

The base 331' may have an elongated shape and may have a shape similar to, for example, a plate.

A plurality of heat dissipation protrusions 332' may be provided, may be connected to the base 331', and may protrude from the base 331' toward a fluid WT.

The heat dissipation protrusions 332' may include at least a first protruding member 332a' and a second protruding member 332b' having a height greater than that of the first protruding member 332a'. In addition, a third protruding member 332c' having a height less than that of the first protruding member 332a' may be included. This may be implemented by controlling a length of each of these different protruding members differently.

In an optional embodiment, the first protruding member 332a' and the second protruding member 332b' may be adjacent to each other, and the first protruding member 332a' and the third protruding member 332c' may be adjacent to each other.

In an optional embodiment, a plurality of first protruding members 332a', a plurality of second protruding members 332b', and a plurality of third protruding members 332c' may be arranged so that a convex region 330p' and a concave region 330c' may be formed. For example, the convex region 330p' may be a region protruding in a direction facing the fluid WT, and the concave region 330c' may be adjacent to the convex region 330p' and have a valley shape concave in a direction facing the base 331.

In addition, in an optional embodiment, the convex region 330p' and the concave region 330c' may be alternately arranged.

Through the structure of the convex region 330p' and the concave region 330c', heat transfer characteristics to the fluid WT in contact therewith may be improved. In addition, since the fluid WT flows smoothly through the convex region 330p' and the concave region 330c', circulation characteristics of the fluid WT in the body part 320' are improved, thereby improving a fluid WT heating rate in the body part 320'.

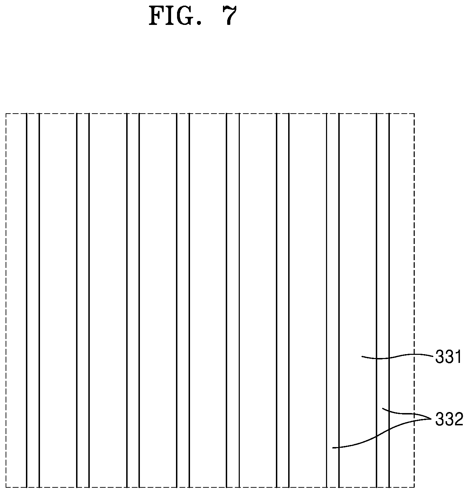

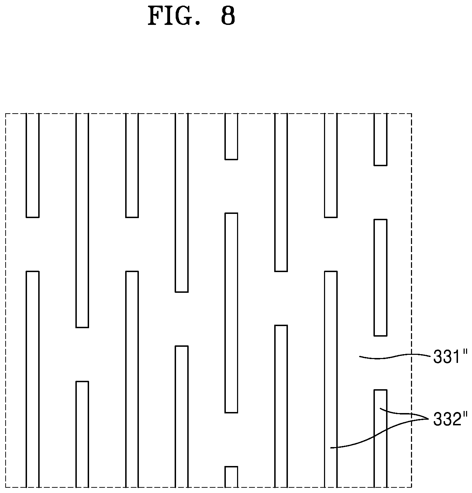

FIGS. 7 and 8 are exemplary views as viewed from M direction in FIG. 5.

Referring to FIG. 7, the heat dissipation protrusion 332 may be formed on one surface of the base 331 of the heat dissipation part 330, and the heat dissipation protrusion 332 may have a shape elongated in one direction. For example, each of the heat dissipation protrusions 332 may be formed on one surface of the base 331 and may be formed in the body part 320 to face one side surface of the body part 320 and a side surface facing the one side surface.

In addition, the heat dissipation protrusions 332 may have shapes spaced apart from each other.

In an optional embodiment, the heat dissipation protrusion 332 may have a width less than a height.

In another example, referring to FIG. 8, a heat dissipation protrusion 332" may be formed on one surface of a base 331" of a heat dissipation part 330", and the heat dissipation protrusion 332" may have a shape elongated in one direction. In addition, a plurality of heat dissipation protrusions 332" spaced apart from each other along a longitudinal direction may be included. Accordingly, a flow path of a fluid WT may be variously formed or formed to be long, thereby improving fluid WT heating characteristics.

The plurality of heat dissipation protrusions 332" adjacent to each other in a direction crossing the longitudinal direction, for example, in a width direction, may be disposed not in parallel with each other.

In an optional embodiment, the plurality of heat dissipation protrusions 332" adjacent to each other in the direction crossing the longitudinal direction, for example, in the width direction, may be arranged side by side with each other

The electrode boiler device of the present embodiment may heat electrolyzed water inside the heating part through control of current applied to the electrodes of the electrode part of the heating part. Such heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Through such a configuration, the heat of the electrolyzed water may be effectively transferred to the fluid, which may improve the heating efficiency of the fluid through the electrolyzed water.

In addition, the heat dissipation part includes a base and a plurality of heat dissipation protrusions to increase a flow path of the fluid on the heat dissipation part, thereby improving fluid heating characteristics.

For example, the heat dissipation protrusion may have a shape elongated in a longitudinal direction, for example, may have a shape elongated to face one region of an inner surface of the body part and a side surface facing the one region. This may improve heating uniformity for the fluid of the body part.

In an optional embodiment, the heat dissipation part includes the plurality of heat dissipation protrusions having different heights and thus may have a convex region and a concave region in a direction facing the fluid. Such a shape of the heat dissipation part enables the fluid in the inner space of the body part to effectively form a flow and an unheated fluid to be heated and convected, thereby improving a heating rate.

In addition, the electrodes of the electrode part are arranged in a shape facing the side surface of the heating part so as to overlap the electrolyzed water, for example, extending in a direction crossing a direction in which the heating part and the body part are arranged, so that an electrolyzed water heating rate in the heating part may be improved.

In addition, the fluid is disposed to overlap the heated electrolyzed water, so that the heating of the fluid may proceed rapidly, and a circulating flow from an unheated fluid introduced into the body part to a heated fluid may proceed smoothly, so that the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, from among the side surfaces of the heat dissipation part, the side surface facing the fluid includes an insulating layer, for example, an inorganic insulating layer such as ceramic, so that leakage current components that may remain in the heat dissipation part may be effectively reduced or prevented from being transmitted to the fluid, thereby increasing the safety of the user even when the fluid is heated and discharged to the outside of the electrode boiler device.

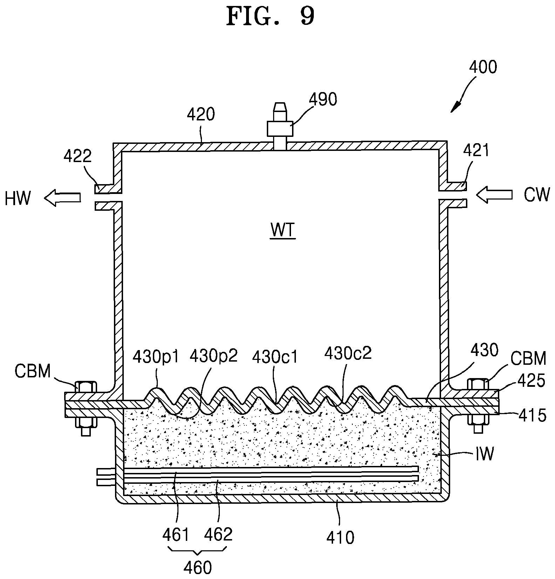

FIG. 9 is a schematic view illustrating an electrode boiler device according to another embodiment of the present disclosure.

Referring to FIG. 9, an electrode boiler device 400 of the present embodiment may include a heating part 410, a body part 420, a heat dissipation part 430, and an electrode part 460.

The heating part 410 may be formed such that electrolyzed water IW is disposed therein. In addition, in an optional embodiment, a first connection part 415 may be formed on one side of the heating part 410. For example, the first connection part 415 may have a shape extending outwardly from an upper end of a side surface of the heating part 410.

The configuration and the like of the heating part 410 are the same as or similar to those described in the embodiment described above, and thus a detailed description thereof will be omitted.

The body part 420 may be formed such that a fluid WT may be disposed therein to overlap the electrolyzed water IW in at least one region. The fluid WT may be of various types, and may include, for example, a liquid or a gas.

In an optional embodiment, the fluid WT may include water, and for example, the electrode boiler device 400 may employ a method of using hot water.

The body part 420 may have various shapes, and may include at least an inlet 421 for inflowing the fluid WT and an outlet 422 for discharging the fluid WT.

In an optional embodiment, a second connection part 425 may be formed on one side of the body part 420, and the second connection part 425 may be formed to overlap the first connection part 415.

The configuration and the like of the body part 420 are the same as or similar to those described in the embodiment described above, and thus a detailed description thereof will be omitted.

The electrode part 460 may be disposed in the heating part 410, and is the same or similar to that described in the embodiment described above, and thus a detailed description thereof will be omitted.

The heat dissipation part 430 may be disposed between the heating part 410 and the body part 420.

The heat dissipation part 430 may be located between the electrolyzed water IW disposed in the heating part 410 and the fluid WT disposed in the body part 420. In addition, the heat dissipation part 430 may be formed to be spaced apart from the electrode part 460.

In an optional embodiment, the heat dissipation part 430 may be in contact with the electrolyzed water IW and may have, for example, a shape covering an upper portion of an open upper side of the heating part 410.

In an optional embodiment, the heat dissipation part 430 may be in contact with the fluid WT and may also have, for example, a shape covering open one side of the body part 420, specifically, one side of the body part 420 facing the heating part 410.

The heat dissipation part 430 may have various shapes, for example, a curved shape. As a specific example, the heat dissipation part 430 may include a first convex region 430p1 and a first concave region 430c1 on the basis of a direction facing the fluid WT. Accordingly, a contact area between the fluid WT and the heat dissipation part 430 may be increased, and a smooth flow of the fluid WT may be formed on an upper portion of the heat dissipation part 430.

In addition, the heat dissipation part 430 may include a second convex region 430p2 and a second concave region 430c2 on the basis of a direction facing the electrolyzed water IW. For example, the second convex region 430p2 may be formed at a position corresponding to the first concave region 430c1, and the second concave region 430c2 may be formed at a position corresponding to the first convex region 430p1. Accordingly, a contact area between the electrolyzed water IW and the heat dissipation part 430 may be increased, and heat may be effectively transferred from the electrolyzed water IW to the heat dissipation part 430.

In an optional embodiment, one or more first convex regions 430p1 and one or more first concave regions 430c1 may be sequentially arranged. In addition, the first convex regions 430p1 and the one or more first concave regions 430c1 may have a shape elongated in one direction, for example, may extend toward one side surface of an inner surface of the body part 420 and a region of a side surface opposite to the one side surface.

In addition, in an optional embodiment, one or more second convex regions 430p2 and one or more second concave regions 430c2 may be sequentially arranged.

The heat dissipation part 430 may be formed of a material having high thermal conductivity, and may be formed to include, for example, a metal material. The heat of the electrolyzed water IW may be easily transferred to the fluid WT through the heat dissipation part 430.

As a specific example, the heat dissipation part 430 may include iron, aluminum, stainless steel, or other alloys.

In addition, in an optional embodiment, the heat dissipation part 430 may include an insulating coating layer (not shown) on one side facing the electrolyzed water IW, and may also include an insulating coating layer (not shown) on one side facing the fluid WT. This may reduce or prevent current from flowing through the heat dissipation part 430 from the electrolyzed water IW.

In an optional embodiment, the heat dissipation part 430 may have a region elongated from a side surface thereof. For example, at least one region of an edge of the heat dissipation part 430, specifically, at least one region of the heat dissipation part 430 may be formed to extend so as not to overlap the electrolyzed water IW and the fluid WT.

In addition, at least one extended region of the heat dissipation part 430 may be formed to overlap the first connection part 415 and the second connection part 425, and may be disposed between the first connection part 415 and the second connection part 425.

As a specific example, at least one extended region of the heat dissipation part 430 may be formed to surround a region in which the electrolyzed water IW or the fluid WT is disposed.

The first connection part 415 and the second connection part 425 may have regions overlapping and coupled to one region of the heat dissipation part 430 disposed therebetween. For example, the first connection part 415, the second connection part 425, and the one region of the heat dissipation part 430 are coupled to each other to couple the heating part 410, the body part 420, and the heat dissipation part 430.

In an optional embodiment, a coupling member CBM may be disposed to overlap the first connection part 415 and the second connection part 425. In addition, the coupling member CBM may be disposed to overlap one region of the heat dissipation part 430. The first connection part 415, the second connection part 425, and the heat dissipation part 430 may be coupled through the coupling member CBM.

For example, the coupling member CBM may have the form of a bolt or a nut. In addition, in another example, the coupling member CBM may include screws, pins, rivets, or other various forms or kinds of members for coupling.

In an optional embodiment, a pressure control part 490 may be formed on one side of the body part 420. For example, the pressure control part 490 may be formed on an upper portion of the body part 420, for example, on a surface opposite a region facing the heating part 410. The configuration and the like of the pressure control part 490 are the same as or similar to those described in the embodiment described above, and thus a detailed description thereof will be omitted.

In an optional embodiment, the configuration of FIG. 2 described above may be applied, and for example, the heat dissipation part 430 may include a first insulating layer (not shown) on a side surface facing the fluid WT and a second insulating layer (not shown) on a side surface facing the electrolyzed water IW. In addition, at this time, the second insulating layer (not shown) may be formed on surfaces of a base 431 and heat dissipation protrusions 432 of the heat dissipation part 430.

In an optional embodiment, the configuration of FIG. 3 described above may be applied, and for example, the heating part 410 may include a third insulating layer (not shown) on an inner surface facing at least the electrolyzed water IW.

Contents of the materials and the like of the first to third insulating layers are the same as those described in the embodiment described above, and thus a detailed description thereof will be omitted.

The electrode boiler device of the present embodiment may heat electrolyzed water inside the heating part through control of current applied to the electrodes of the electrode part of the heating part. Such heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Through such a configuration, the heat of the electrolyzed water may be effectively transferred to the fluid, which may improve the heating efficiency of the fluid through the electrolyzed water.

In addition, the heat dissipation part includes one or more first convex regions and one or more first concave regions formed to face the fluid, and thus may improve heat transfer efficiency from the heat dissipation part to the fluid and improve a smooth circulation of the fluid through the flow of the fluid.

In addition, the heat dissipation part includes one or more second convex regions and one or more second concave regions formed to face the electrolyzed water, so that heat transfer from the electrolyzed water to the heat dissipation part may be smoothly performed.

In addition, the electrodes of the electrode part are arranged in a shape facing the side surface of the heating part so as to overlap the electrolyzed water, for example, extending in a direction crossing a direction in which the heating part and the body part are arranged, so that an electrolyzed water heating rate in the heating part may be improved.

In addition, the fluid is disposed to overlap the heated electrolyzed water, so that the heating of the fluid may proceed rapidly, and a circulating flow from an unheated fluid introduced into the body part to a heated fluid may proceed smoothly, so that the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, from among the side surfaces of the heat dissipation part, the side surface facing the fluid includes an insulating layer, for example, an inorganic insulating layer such as ceramic, so that leakage current components that may remain in the heat dissipation part may be effectively reduced or prevented from being transmitted to the fluid, thereby increasing the safety of the user even when the fluid is heated and discharged to the outside of the electrode boiler device.

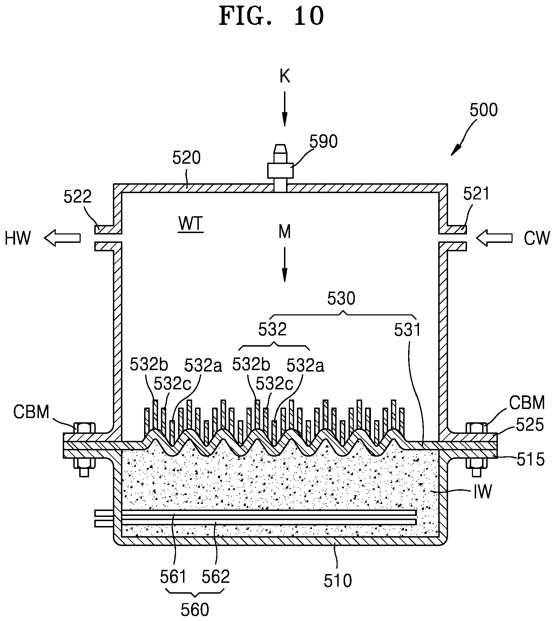

FIG. 10 is a schematic view illustrating an electrode boiler device according to another embodiment of the present disclosure.

Referring to FIG. 10, an electrode boiler device 500 of the present embodiment may include a heating part 510, a body part 520, a heat dissipation part 530, and an electrode part 560.

The heating part 510 may be formed such that electrolyzed water IW is disposed therein. In addition, in an optional embodiment, a first connection part 515 may be formed on one side of the heating part 510. For example, the first connection part 515 may have a shape extending outwardly from an upper end of a side surface of the heating part 510.

The configuration and the like of the heating part 510 are the same as or similar to those described in the embodiment described above, and thus a detailed description thereof will be omitted.

The body part 520 may be formed such that a fluid WT may be disposed therein to overlap the electrolyzed water IW in at least one region. The fluid WT may be of various types, and may include, for example, a liquid or a gas.

In an optional embodiment, the fluid WT may include water, and for example, the electrode boiler device 500 may employ a method of using hot water.

The body part 520 may have various shapes, and may include at least an inlet 521 for inflowing the fluid WT and an outlet 522 for discharging the fluid WT.

In an optional embodiment, a second connection part 525 may be formed on one side of the body part 520, and the second connection part 525 may be formed to overlap the first connection part 515.

The configuration and the like of the body part 520 are the same as or similar to those described in the embodiment described above, and thus a detailed description thereof will be omitted.

The electrode part 560 may be disposed in the heating part 510, and is the same or similar to that described in the embodiment described above, and thus a detailed description thereof will be omitted.

The heat dissipation part 530 may be disposed between the heating part 510 and the body part 520.

The heat dissipation part 530 may be located between the electrolyzed water IW disposed in the heating part 510 and the fluid WT disposed in the body part 520. In addition, the heat dissipation part 530 may be formed to be spaced apart from the electrode part 560.

In an optional embodiment, the heat dissipation part 530 may be in contact with the electrolyzed water IW and may have, for example, a shape covering an upper portion of an open upper side of the heating part 510.

In an optional embodiment, the heat dissipation part 530 may be in contact with the fluid WT and may also have, for example, a shape covering open one side of the body part 520, specifically, one side of the body part 520 facing the heating part 510.

The heat dissipation part 530 may have various shapes, for example, a curved shape. As a specific example, the heat dissipation part 530 may include a convex region and a concave region on the basis of a direction facing the fluid WT.

As a specific example, the heat dissipation part 530 may include a base 531 and a heat dissipation protrusion 532.

The base 531 may have a shape extending such that at least one region is out of the electrolyzed water IW and the fluid WT.

In addition, the base 531 may have a curved shape. For example, the base 531 may have a curved shape so as to have convex and concave regions on the basis of a direction facing the fluid WT, which may increase a contact area with the fluid WT and form a smooth flow of the fluid WT on the upper portion of the heat dissipation part 530. In addition, the base 531 is formed to include a convex region and a concave region on the basis of a direction facing the electrolyzed water IW, so that a contact area between the electrolyzed water IW and the heat dissipation part 530 may be increased, and heat may be effectively transferred from the electrolyzed water IW to the heat dissipation part 530.

A plurality of heat dissipation protrusions 532 may be provided, may be connected to the base 531, and may protrude from the base 531 toward the fluid WT.

Heat transfer efficiency from the heat dissipation part 330 to the fluid WT may be improved through the plurality of heat dissipation protrusions 532.

In an optional embodiment, the plurality of heat dissipation protrusions 532 may have a shape extending in one direction and may have regions spaced apart from each other.

The heat dissipation protrusions 532 may include a first protruding member 532a, a second protruding member 532b, or a third protruding member 532c as a plurality of protruding members having different heights with respect to a position of the electrode part 560.

For example, the second protruding member 532b may have a height higher than that of the first protruding member 532a, and the third protruding member 532c may have a height corresponding to that between the first protruding member 532a and the second protruding member 532b. Due to these different heights, a plurality of convex or concave regions facing the fluid WT inside the body part 520 may be formed, and the flow of the fluid WT may be facilitated to improve circulation characteristics of the fluid WT in the body part 520, thereby improving a fluid WT heating rate in the body part 520.

In an optional embodiment, the first protruding member 532a, the second protruding member 532b, or the third protruding member 532c may have a length with respect to a direction protruding from the base 531 of the heat dissipation part 530, and each length may be the same.

The heat dissipation part 530 may be formed of a material having high thermal conductivity, and may be formed to include, for example, a metal material. The heat of the electrolyzed water IW may be easily transferred to the fluid WT through the heat dissipation part 530.

As a specific example, the heat dissipation part 530 may include iron, aluminum, stainless steel, or other alloys.

In addition, in an optional embodiment, the heat dissipation part 530 may include an insulating coating layer (not shown) on one side facing the electrolyzed water IW, and may also include an insulating coating layer (not shown) on one side facing the fluid WT. This may reduce or prevent current from flowing through the heat dissipation part 530 from the electrolyzed water IW.

In an optional embodiment, the heat dissipation part 530 may have a region elongated from a side surface thereof. For example, at least one region of an edge of the heat dissipation part 530, specifically, at least one region of the heat dissipation part 530 may be formed to extend so as not to overlap the electrolyzed water IW and the fluid WT.

In addition, at least one extended region of the heat dissipation part 530 may be formed to overlap the first connection part 515 and the second connection part 525, and may be disposed between the first connection part 515 and the second connection part 525.

As a specific example, at least one extended region of the heat dissipation part 530 may be formed to surround a region in which the electrolyzed water IW or the fluid WT is disposed.

The first connection part 515 and the second connection part 525 may have regions overlapping and coupled to one region of the heat dissipation part 530 disposed therebetween. For example, the first connection part 515, the second connection part 525, and the one region of the heat dissipation part 530 are coupled to each other to couple the heating part 510, the body part 520, and the heat dissipation part 530.

In an optional embodiment, a coupling member CBM may be disposed to overlap the first connection part 515 and the second connection part 525. In addition, the coupling member CBM may be disposed to overlap one region of the heat dissipation part 530. The first connection part 515, the second connection part 525, and the heat dissipation part 530 may be coupled through the coupling member CBM.

For example, the coupling member CBM may have the form of a bolt or a nut. In addition, in another example, the coupling member CBM may include screws, pins, rivets, or other various forms or kinds of members for coupling.

In an optional embodiment, a pressure control part 590 may be formed on one side of the body part 520. For example, the pressure control part 590 may be formed on an upper portion of the body part 520, for example, on a surface opposite a region facing the heating part 510. The configuration and the like of the pressure control part 590 are the same as or similar to those described in the embodiment described above, and thus a detailed description thereof will be omitted.

In an optional embodiment, the configuration of FIG. 2 described above may be applied, and for example, the heat dissipation part 530 may include a first insulating layer (not shown) on a side surface facing the fluid WT and a second insulating layer (not shown) on a side surface facing the electrolyzed water IW. In addition, at this time, the second insulating layer (not shown) may be formed on surfaces of a base 531 and heat dissipation protrusions 532 of the heat dissipation part 530.

In an optional embodiment, the configuration of FIG. 3 described above may be applied, and for example, the heating part 510 may include a third insulating layer (not shown) on an inner surface facing at least the electrolyzed water IW.

Contents of the materials and the like of the first to third insulating layers are the same as those described in the embodiment described above, and thus a detailed description thereof will be omitted.

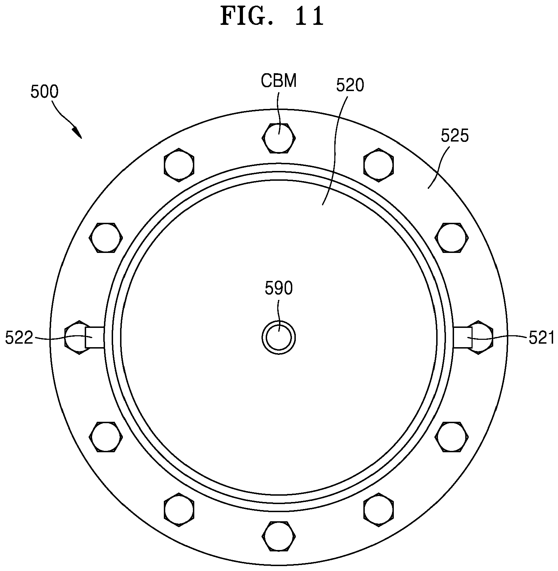

FIG. 11 is an exemplary view as viewed from K direction of FIG. 10.

Referring to FIG. 11, in an optional embodiment, the body part 520 may have a shape of a pillar having a plane or cross-section similar to a circular shape, for example, a shape having a portion of a hollow cylinder.

In addition, the second connection part 525 may be formed around a side surface of the body part 520 and may have a width for coupling. In addition, although not shown in the drawing, the first connection part 515 of the heating part 510 may be formed to correspond to and overlap the second connection part 525, one region of the heat dissipation part 530, specifically, an extended region of the base 531 of the heat dissipation part 530 may be disposed therebetween, and the first connection part 515, the second connection part 525, and the one region of the heat dissipation part 530 may be coupled by a plurality of coupling members CBM.

As illustrated in the drawing, the plurality of coupling members CBM may be formed around the side surface of the body part 520 to be spaced apart from each other.

Regions coupled by the coupling member CBM, for example, the first connection part 515 and the second connection part 525, and the region of the heat dissipation part 530 therebetween may be regions disposed outside the electrolyzed water IW and the fluid WT. Accordingly, heating of the electrolyzed water IW through the electrode part 560 and efficient heating of the fluid WT through the electrolyzed water IW may be easily performed.

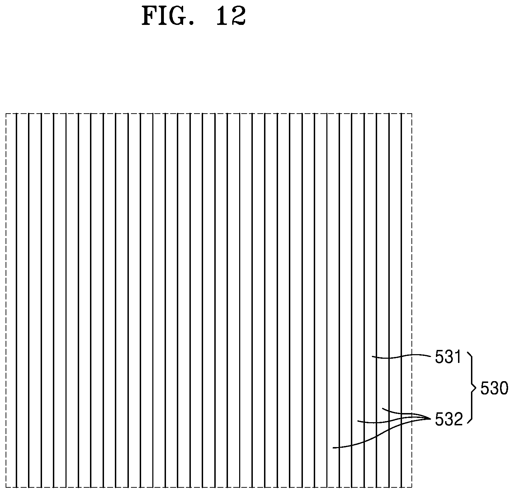

FIG. 12 is an exemplary view as viewed from M direction of FIG. 10.

In an optional embodiment, the heat dissipation protrusions 532 may be formed on one surface of the base 531, and the heat dissipation protrusion 532 may have a shape elongated in one direction. For example, each of the heat dissipation protrusions 532 may be formed on one surface of the base 531 and may be formed in the body part 520 to face one side surface of the body part 520 and a side surface facing the one side surface.

In addition, the heat dissipation protrusions 532 may have shapes spaced apart from each other.

In an optional embodiment, the heat dissipation protrusion 532 may have a width less than a height.

The electrode boiler device of the present embodiment may heat electrolyzed water inside the heating part through control of current applied to the electrodes of the electrode part of the heating part. Such heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Through such a configuration, the heat of the electrolyzed water may be effectively transferred to the fluid, which may improve the heating efficiency of the fluid through the electrolyzed water.

In addition, the heat dissipation part includes a body part and heat dissipation protrusions, and the body part includes one or more convex regions and one or more concave regions formed to face the fluid, so that heat transfer efficiency from the heat dissipation part to the fluid may be improved and smooth circulation of the fluid may be improved through the flow of the fluid.

In addition, the base of the heat dissipation part includes one or more convex regions and one or more concave regions formed to face the electrolyzed water, so that heat transfer from the electrolyzed water to the heat dissipation part may be smoothly performed.

In addition, the heat dissipation protrusion includes a plurality of heat dissipation protrusions protruding from the base, and the heat dissipation protrusions may have shapes elongated and spaced apart from each other in an optional embodiment. An area for heat transfer to the fluid through the heat dissipation part may be increased through the heat dissipation protrusions, so that a fluid heating rate may be improved and heating uniformity may be improved.

In addition, the electrodes of the electrode part are arranged in a shape facing the side surface of the heating part so as to overlap the electrolyzed water, for example, extending in a direction crossing a direction in which the heating part and the body part are arranged, so that an electrolyzed water heating rate in the heating part may be improved.

In addition, the fluid is disposed to overlap the heated electrolyzed water, so that the heating of the fluid may proceed rapidly, and a circulating flow from an unheated fluid introduced into the body part to a heated fluid may proceed smoothly, so that the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, from among the side surfaces of the heat dissipation part, the side surface facing the fluid includes an insulating layer, for example, an inorganic insulating layer such as ceramic, so that leakage current components that may remain in the heat dissipation part may be effectively reduced or prevented from being transmitted to the fluid, thereby increasing the safety of the user even when the fluid is heated and discharged to the outside of the electrode boiler device.

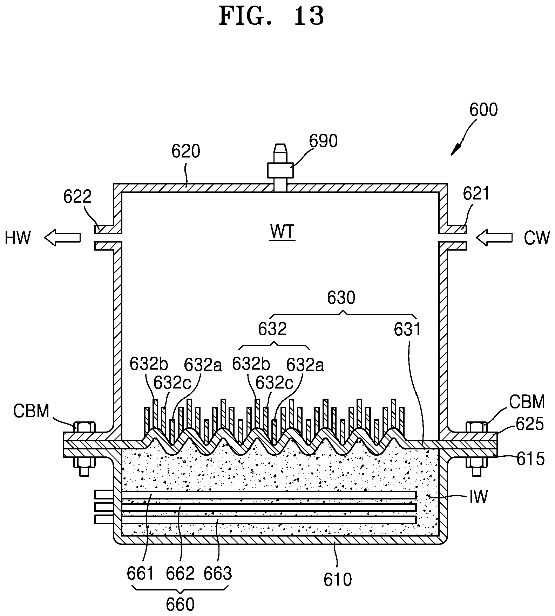

FIG. 13 is a schematic view illustrating an electrode boiler device according to another embodiment of the present disclosure.

Referring to FIG. 13, an electrode boiler device 600 of the present embodiment may include a heating part 610, a body part 620, a heat dissipation part 630, and an electrode part 660.

For convenience of description, differences from the above-described embodiments will be mainly described.

The electrode part 660 of the present embodiment may be provided in a three-phase form, and may include three electrode members. Specifically, the electrode part 660 may include a first electrode 661, a second electrode 662, and a third electrode 663.

The first, second, and third electrodes 661, 662, and 663 may be electrically connected to an electrode control part so that a current is applied thereto.

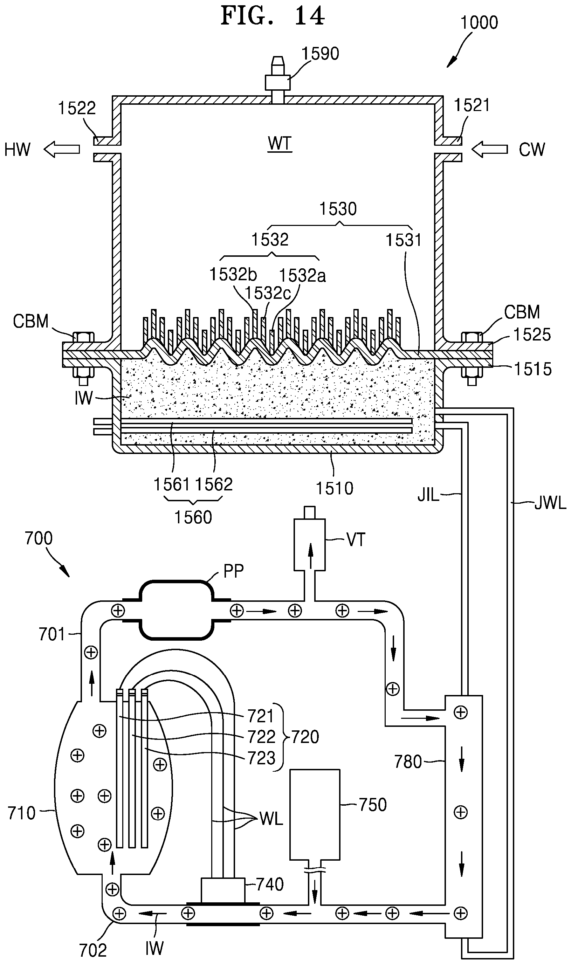

FIG. 14 is a schematic view illustrating an electrode boiler device according to another embodiment of the present disclosure.

Referring to FIG. 14, an electrode boiler device 1000 of the present embodiment may include a heating part 1510, a body part 1520, a heat dissipation part 1530, an electrode part 1560, and an electrolyzed water supply control module 700.

For convenience of description, differences from the above-described embodiments will be mainly described.

Descriptions of the members including the heating part 1510, the body part 1520, the heat dissipation part 1530, and the electrode part 1560 are the same as those described in an optional one of the above-described embodiments, and thus descriptions of specific contents thereof will omitted.

The electrolyzed water supply control module 700 may be connected to the heating part 1510, and may supply electrolyzed water IW to the heating part 1510.

For example, the electrolyzed water supply control module 700 may be fluidly connected to the heating part 1510 through a first path JIL and a second path JWL, and may supply and replenish the electrolyzed water IW to the heating part 1510. In addition, in an optional embodiment, the electrolyzed water IW may flow from the heating part 1510 into the electrolyzed water supply control module 700 through the first path JIL and the second path JWL, and may be processed in the electrolyzed water supply control module 700, and then, may flow back to the heating part 1510.

The electrolyzed water supply control module 700 will be described in more detail.

The electrolyzed water supply control module 700 may include a space part 710, an electrode set 720, a first flow path 701, a second flow path 702, and a supply part 780.

The space part 710 may be formed to accommodate the electrode set 720. In addition, the space part 710 may be formed so as to accommodate the electrolyzed water IW.

The space part 710 may have various shapes, and may be formed to accommodate the electrode set 720. In an optional embodiment, one end of the electrode set 720 may be formed to be spaced apart from one surface of the space part 710.

The electrolyzed water IW in the space part 710 may be heated by Joule heat under the control of a current applied through the electrode set 720, and the electrolyzed water IW heated in the space part 710 may be a primary heat supply source.

The space part 710 may be formed of various materials. For example, the space part 710 may be formed of a durable material, specifically, may be formed of a metal material.

In an optional embodiment, the space part 710 may be formed of an insulating material. For example, the space part 710 may include a resin and a ceramic.

In another example, the space part 710 may include a Teflon resin that is a fluorine resin.

In an optional embodiment, from among surfaces of the space part 710, at least an inner surface of the space part 710, which is adjacent to the electrolyzed water IW, may include a Teflon resin layer may be included. The Teflon resin layer may be an insulating Teflon layer.

In addition, in an optional embodiment, from among the surfaces of the space part 710, the inner surface of the space part 710, which is adjacent to the electrolyzed water IW, may include an anti-static Teflon resin layer may be included.

The electrode set 720 may be disposed to be in contact with the electrolyzed water IW in the space part 710. The electrode set 720 may include a plurality of electrodes 721, 722, and 723.

For example, the electrode set 720 may be provided in a three-phase form and may include three electrodes 721, 722, and 723 arranged in a triangular shape, specifically, in a shape similar to an equilateral triangle,.

Although not shown in the drawing, in another optional embodiment, the electrode set 720 may be provided in a two-phase form and may include two electrodes.

One region of each of the electrodes 721, 722, and 723 may be connected to a conductive part WL so that a current is applied to each of the electrodes 721, 722, and 723. The conductive part WL may be a conducting wire in the form of a wire.

In addition, the conductive part WL may be disposed in one region disposed outside the space part 710 so as not to be in contact with the electrolyzed water IW, and may be formed to be connected to each of the electrodes 721, 722, and 723 in the outside of the space part 710.

The first flow path 701 may be formed to be connected to the space part 710. The first flow path 701 may be connected to the space part 710 and formed to allow the electrolyzed water IW to flow into the space part 710.

The electrolyzed water IWflown out from the space part 710, for example, the electrolyzed water IW heated by the current applied to the electrode set 720, may be transmitted to the supply part 780 through the first flow path 701.

In an optional embodiment, the first flow path 701 may be connected to an upper portion region of the space part 710, and the upper portion region may be a region far from the ground among the regions of the space part 710. Accordingly, the electrolyzed water IW heated in the space part 710 may be easily discharged to the first flow path 701.

In an optional embodiment, a pump part PP may be disposed to be connected to the first flow path 701.

The pump part PP may apply a pressure so that the heated electrolyzed water IW in the space part 710 is easily transmitted to the supply part 780 through the first flow path 701. In addition, when the heated electrolyzed water IW in the space part 710 is transmitted to the supply part 780 through the first flow path 701, a flow quantity and flow rate of the electrolyzed water IW may be controlled through the control of the pump part PP.

In an optional embodiment, a vent part VT may be disposed to be connected to the first flow path 701.

The vent part VT may be formed to discharge a vapor pressure generated due to the temperature of the continuously heated electrolyzed water IW while the heated electrolyzed water IW in the space part 710 is transmitted to the supply part 780 through the first flow path 701, and, conversely, may be formed to additionally introduce air when necessary.

In an optional embodiment, the vent part VT may include a valve or the like to selectively control the discharge of the vapor pressure of the first flow path 701 at a necessary time.

In an optional embodiment, the vent part VT may be disposed between the pump part PP and the supply part 780. Through this, an increase in pressure due to excessive flow of the electrolyzed water IW, which has passed through the pump part PP that behaves abnormally during the operation of the pump part PP, to the supply part 780 and excessive boiling in the first flow path 701 may be easily controlled.

The first flow path 701 may be formed of various materials. For example, the first flow path 701 may be formed of a durable and heat-resistant material to withstand the rapid flow and heating of the electrolyzed water IW, specifically, may be formed of a metal material.

In an optional embodiment, the first flow path 701 may be formed of an insulating material. For example, the first flow path 701 may include a resin and a ceramic.

In another example, the first flow path 701 may include a Teflon resin that is a fluorine resin.

In an optional embodiment, from among surfaces of the first flow path 701, at least an inner surface of the first flow path 701, which is adjacent to the electrolyzed water IW, may include a Teflon resin layer. The Teflon resin layer may be an insulating Teflon layer.

In addition, in an optional embodiment, from among the surfaces of the first flow path 701, the inner surface of the first flow path 701, which is adjacent to the electrolyzed water IW, may include an anti-static Teflon resin layer may be included.

In addition, in an optional embodiment, from among regions of the first flow path 701, an inner surface of the region of the first flow path 701, which is connected to each of the pump part PP and the vent part VT, may include an anti-static Teflon resin layer.

The second flow path 702 may be formed to be connected to the space part 710. The second flow path 702 may be connected to the space part 710 and formed to allow the electrolyzed water IW to flow into the space part 710.

The electrolyzed water IWflown out from the space part 710, for example, the electrolyzed water IW heated by the current applied to the electrode set 720, may be transmitted to the supply part 780 through the first flow path 701.

In addition, the electrolyzed water IW transmitted to the supply part 780 may be supplied to the heating part 1510 through the first path JIL or the second path JWL, for example, through the first path JIL.

In addition, in an optional embodiment, the electrolyzed water IW may be introduced into the supply part 780 from the heating part 1510 through the first path JIL or the second path JWL, for example, through the second path JWL.

The electrolyzed water IW accommodated in the supply part 780 may be introduced into the space part 710 through the second flow path 702. The electrolyzed water IW introduced via the second flow path 702 may heated by the current applied through the electrode set 720 and discharged again in a direction of the supply part 780 through the first flow path 701.

Through this process, the heated electrolyzed water IW may be easily supplied and replenished toward the heating part 1510. In addition, since the electrolyzed water IW, which is heated in the space part 710 through the current applied through the electrode set 720, is supplied to the heating part 1510, the quality of the electrolyzed water IW may be easily maintained, and, for example, electrical characteristics of the electrolyzed water IW may be maintained by maintaining characteristics such as concentration, ion content, and the like. Electrolyzed water IW heating characteristics in the heating part 1510 must be precisely controlled according to the electrical characteristics of the electrolyzed water IW, and in the present embodiment, the electrical quality of the electrolyzed water IW in the heating part 1510 is easily maintained since the electrolyzed water IW electrically treated multiple times or continuously in the electrode set 720 of the space part 710 may be moved to the supply part 780 and may replenished to the heating part 1510.

In an optional embodiment, the second flow path 702 may be connected to a lower portion region of the space part 710, and the lower portion region may be a region more adjacent to the ground among the regions of the space part 710 than an upper surface of the space part 710, to which the first flow path 701 is connected.

In an optional embodiment, a replenishment part 750 may be disposed to be connected to the second flow path 702.

The replenishment part 750 may be connected to the second flow path 702 and may be formed to supply the electrolyzed water IW to the second flow path 702.

In an optional embodiment, the replenishment part 750 may be connected to a separately provided supply part (not shown) and may receive the electrolyzed water IW from the supply part.

The replenishment part 750 may be connected to the second flow path 702 to supply electrolyzed water IW so that the electrolyzed water IW joins the electrolyzed water IW having a lower temperature than the electrolyzed water IW flowing through the first flow path 701. This may reduce or prevent overflow or abnormal increase in vapor pressure due to rapid additional replenishment of the heated electrolyzed water IW in the first flow path 701.

The second flow path 702 may be formed of various materials. For example, the second flow path 702 may be formed of a durable and heat-resistant material to withstand the rapid flow and heating of the electrolyzed water IW, specifically, may be formed of a metal material.

In an optional embodiment, the second flow path 702 may be formed of an insulating material. For example, the second flow path 702 may include a resin and a ceramic.

In another example, the second flow path 702 may include a Teflon resin that is a fluorine resin.

In an optional embodiment, from among surfaces of the second flow path 702, at least an inner surface of the second flow path 702, which is adjacent to the electrolyzed water IW, may include a Teflon resin layer. The Teflon resin layer may be an insulating Teflon layer.

In an optional embodiment, a temperature sensing part 740 may be connected to the second flow path 702 and may measure the temperature of the electrolyzed water IW passing through the second flow path 702.

For example, the temperature sensing part 740 may be formed and disposed to measure the temperature of the electrolyzed water IW in the second flow path 702 in real time.

In an optional embodiment, the temperature sensing part 740 may be connected to the second flow path 702 and may reduce the decrease in accuracy of temperature measurement, the deterioration of performance, and the occurrence of malfunctions or defects due to the heated electrolyzed water IW flowing through the first flow path 701.

In an optional embodiment, a cooling part (not shown) may be disposed to be adjacent to the temperature sensing part 740 to control overheating of the temperature sensing part 740.

A control part (not shown) may be formed to control the current applied to the electrode set 720.

In an optional embodiment, the control part (not shown) may be connected to the conductive part WL connected to each of the electrodes 721, 722, and 723 of the electrode set 720.

Through this, the control part (not shown) may control the current applied to the electrode set 720 in real time.

At this time, the control part (not shown) may check the amount of current applied to the electrode set 720 and perform a current control by increasing or decreasing the amount of current according to a set value.

In an optional embodiment, the control part (not shown) may check the amount of current applied to the electrode set 720 in real time and perform a current control by increasing or decreasing the amount of current according to a set value, so that a rapid change in the temperature of the electrolyzed water IW may be reduced.

In addition, in an optional embodiment, the control part (not shown) may be connected to the temperature sensing part 740, and may control the current applied to the electrode set 720 by using the temperature measured by the temperature sensing part 740. For example, when the temperature measured by the temperature sensing part 740 exceeds a normal setting range, the current applied to the electrode set 720 may be decreased below the normal setting range, and when the temperature measured by the temperature sensing part 740 is less than the normal setting range, the current applied to the electrode set 720 may be increased above the normal setting range.

At this time, the control part (not shown) may have a value of the "decreased temperature" or "increased temperature" set to be higher or lower than the normal setting range as a preset value.

In addition, in another example, the control part (not shown) may compare the measured temperature with the normal setting range and change the current according to an "increasing rate" and a "decreasing rate" corresponding to a difference value, and information on the value of the current to be changed according to the "increasing rate" and the "decreasing rate" may be set in advance and may be possessed by the control part (not shown).

In an optional embodiment, the control part (not shown) may be connected to the temperature sensing part 740 to communicate therewith while being spaced apart therefrom.

In another example, the control part (not shown) may be disposed to be connected to the temperature sensing part 740, and specifically, the control part (not shown) may be disposed on one surface of the temperature sensing part 740.

Further, in another example, the control part (not shown) may be formed to be integrated with the temperature sensing part 740.

The control part (not shown) may have various forms to facilitate a change in current. For example, the control part (not shown) may include various types of switches, and may include a non-contact relay such as an SSR for sensitive and rapid control.

In an optional embodiment, a cooling part (not shown) may be disposed to be adjacent to the control part (not shown) to control overheating of the control part (not shown).

The electrode boiler device of the present embodiment may include an electrolyzed water supply control module. The electrolyzed water may be supplied one or more times or multiple times through the electrolyzed water supply control module, and may be supplied in real time as a specific example. At this time, electrolyzed water electrically treated through the electrode set in the space part of the electrolyzed water supply control module may be supplied, and the electrolyzed water may be heated electrolyzed water.

As a result, a decrease in the temperature of the electrolyzed water accommodated in the heating part is reduced, so that heating efficiency of the electrolyzed water may be improved through the electrode part disposed in the heating part, and fluid heating characteristics and heating uniformity in the body part may be improved.

In addition, precise control through the electrode part disposed inside the heating part is facilitated by easily maintaining the electrical characteristics of the electrolyzed water accommodated inside the heating part, so that the temperature of the electrolyzed water inside the heating part may be precisely controlled, and fluid heating characteristics and fluid temperature control of the fluid disposed inside the body part may be precisely controlled.

Although the present disclosure has been described with reference to the embodiment shown in the drawings, which is merely exemplary, it will be understood by those skilled in the art that various modifications and equivalent other embodiments are possible therefrom. Accordingly, the true technical protection scope of the present disclosure should be determined by the technical spirit of the appended claims.

The particular implementations shown and described herein are illustrative examples of the embodiments and are not intended to otherwise limit the scope of the embodiments in any way. In addition, no item or component is essential to the practice of the present disclosure unless the component is specifically described as "essential" or "critical".

The use of the terms "a" and "an" and "the" and similar referents in the context of describing the present disclosure (especially in the context of the following claims) are to be construed to cover both the singular and the plural. Further, recitation of ranges of values herein are merely intended to serve as a shorthand method of referring individually to each separate value falling within the range, unless otherwise indicated herein, and each separate value is incorporated into the specification as if it were individually recited herein. Finally, operations of all methods described herein can be performed in any suitable order unless otherwise indicated herein or otherwise clearly contradicted by context. The present disclosure is not limited to the described order of the operations. The use of any and all examples, or exemplary terms (e.g., "such as") provided herein, is intended merely to better illuminate the present disclosure and does not pose a limitation on the scope of the present disclosure unless otherwise claimed. Also, numerous modifications and adaptations will be readily apparent to one of ordinary skill in the art without departing from the spirit and scope of the present disclosure.

## Claims

1. An electrode boiler device configured to heat a fluid, the electrode boiler device comprising:
a heating part formed such that electrolyzed water is disposed therein;
a body part formed such that the fluid is disposed therein to overlap the electrolyzed water in at least one region;
an electrode part including a plurality of electrodes that are disposed in the heating part to overlap the fluid in the body part and formed to heat the electrolyzed water; and
a heat dissipation part disposed between the heating part and the body part.

2. The electrode boiler device of claim 1, wherein
the heat dissipation part further includes an insulating layer formed on one side thereof facing the electrolyzed water.

3. The electrode boiler device of claim 1, wherein
at least one region of each of the heating part, the body part, and the heat dissipation part includes a region extending from a side surface, overlapping each other, and coupled to each other.

4. The electrode boiler device of claim 1, wherein
the heat dissipation part includes a base and a plurality of heat dissipation protrusions formed to protrude from the base to face the fluid.
